# EUROPEAN PATENT APPLICATION

(11) **EP 4 462 709 A1**
(43) Date of publication of application: **13.11.2024**
(21) Application number: 22918483.3
(22) Date of filing: 29.12.2022
(51) Int. Cl.: H04L 5/00

(54) **CHANNEL STATE INFORMATION (CSI) FEEDBACK METHOD AND APPARATUS, TERMINAL, AND NETWORK SIDE DEVICE**

(30) Priority: 04.01.2022 CN 202210003206
(71) Applicant: VIVO MOBILE COMMUNICATION CO., LTD., Dongguan, Guangdong 523863 (CN)
(72) Inventor: TAMRAKAR, Rakesh, Dongguan, Guangdong 523863 (CN)
(74) Representative: Lavoix
(86) International application number: PCT/CN2022/143287
(87) International publication number: WO 2023/131042

(57) **Abstract**

This application discloses a channel state information CSI feedback method and apparatus, a terminal, and a network-side device and pertains to the field of communication technologies. The method in embodiments of this application includes: determining, by a terminal, N to-be-measured channel state information reference signals CSI-RSs, where N is an integer greater than 1; measuring, by the terminal, the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N; and transmitting, by the terminal, the CSI to a network-side device.

## Description

### CROSS-REFERENCE TO RELATED APPLICATIONS

This application claims priority to Chinese Patent Application No. 202210003206.4, filed in China on January 4, 2022, which is incorporated herein by reference in its entirety.

### TECHNICAL FIELD

This application pertains to the field of communication technologies and specifically relates to a channel state information CSI feedback method and apparatus, a terminal, and a network-side device.

### BACKGROUND

The current technology supports type II channel state information (Type II Channel State Information, Type II CSI). A terminal performs measurement based on a configured channel state information reference signal (Channel State Information Reference Signal, CSI-RS), and reports, based on a related configuration, a plurality of beam indexes and amplitude and phase information of each frequency domain subband corresponding to each beam.

The current technology further supports evolved type II CSI. A precoding matrix is compressed in frequency domain based on the type II CSI and then reported. The reported information includes a bitmap. The bitmap indicates that a coefficient, subjected to frequency-domain compression, corresponding to each beam is 0 or 1. 0 indicates that an amplitude and a phase corresponding to the coefficient are not reported. 1 indicates that the amplitude and the phase corresponding to the coefficient are reported.

The CSI feedback mode in the current technology is applicable only to a single-point transmission system. How to configure a channel measurement pilot and how a terminal reports type II CSI in a multipoint transmission system are not defined in the current technology.

### SUMMARY

Embodiments of this application provide a channel state information CSI feedback method and apparatus, a terminal, and a network-side device, to report CSI in a multipoint transmission system.

According to a first aspect, a channel state information CSI feedback method is provided, including:
determining, by a terminal, N to-be-measured channel state information reference signals CSI-RSs, where N is an integer greater than 1;
measuring, by the terminal, the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N; and
transmitting, by the terminal, the CSI to a network-side device.

According to a second aspect, a channel state information CSI feedback method is provided, including:
receiving, by a network-side device, CSI reported by a terminal after the terminal measures N CSI-RSs, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

According to a third aspect, a channel state information CSI feedback apparatus is provided, including:
a first determining module, configured to determine N to-be-measured channel state information reference signals CSI-RSs, where N is an integer greater than 1;
a second determining module, configured to measure the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N; and
a transmitting module, configured to transmit the CSI to a network-side device.

According to a fourth aspect, a channel state information CSI feedback apparatus is provided, including:
a receiving module, configured to receive CSI reported by a terminal after the terminal measures N CSI-RSs, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

According to a fifth aspect, a terminal is provided, where the terminal includes a processor and a memory, the memory stores a program or instructions capable of running on the processor, and when the program or instructions are executed by the processor, the steps of the method according to the first aspect are implemented.

According to a sixth aspect, a terminal is provided, including a processor and a communications interface. The processor is configured to: determine N to-be-measured channel state information reference signals CSI-RSs, where N is an integer greater than 1; and measure the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N. The communications interface is configured to transmit the CSI to a network-side device.

According to a seventh aspect, a network-side device is provided, where the network-side device includes a processor and a memory, the memory stores a program or instructions capable of running on the processor, and when the program or instructions are executed by the processor, the steps of the method according to the second aspect are implemented.

According to an eighth aspect, a network-side device is provided, including a processor and a communications interface. The communications interface is configured to receive CSI reported by a terminal after the terminal measures N CSI-RSs, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

According to a ninth aspect, a communications system is provided, including a terminal and a network-side device, where the terminal may be configured to perform the steps of the channel state information CSI feedback method according to the first aspect, and the network-side device may be configured to perform the steps of the channel state information CSI feedback method according to the second aspect.

According to a tenth aspect, a readable storage medium is provided, where the readable storage medium stores a program or instructions, and when the program or instructions are executed by a processor, the steps of the method according to the first aspect are implemented, or the steps of the method according to the second aspect are implemented.

According to an eleventh aspect, a chip is provided, where the chip includes a processor and a communications interface, the communications interface is coupled to the processor, and the processor is configured to run a program or instructions, to implement the method according to the first aspect, or implement the method according to the second aspect.

According to a twelfth aspect, a computer program or program product is provided, where the computer program or program product is stored in a storage medium, and the computer program or program product is executed by at least one processor to implement the steps of the method according to the first aspect, or implement the steps of the method according to the second aspect.

In the embodiments of this application, in a multipoint transmission system, a terminal measures a plurality of CSI-RSs and then reports CSI, where the CSI carries a bitmap that corresponds to the CSI-RSs and that is determined by the terminal according to a network-configured or pre-agreed-upon mapping rule. A network-side device can determine, according to a corresponding mapping rule, a mapping relationship between the bitmap in the CSI and coefficients, subjected to frequency-domain compression, of beams that need feedback of the CSI-RS, so that the terminal and the network-side device can have consistent understanding of the bitmap, to improve efficiency of correct transmission of the CSI.

### BRIEF DESCRIPTION OF DRAWINGS

FIG. 1 is a block diagram of a wireless communications system to which embodiments of this application are applicable;
FIG. 2 is a first flowchart of steps of a channel state information CSI feedback method according to an embodiment of this application;
FIG. 3 is a second flowchart of steps of a channel state information CSI feedback method according to an embodiment of this application;
FIG. 4 is an example diagram of a multipoint transmission system in Example 1 according to an embodiment of this application;
FIG. 5 is a first schematic structural diagram of a channel state information CSI feedback apparatus according to an embodiment of this application;
FIG. 6 is a second schematic structural diagram of a channel state information CSI feedback apparatus according to an embodiment of this application;
FIG. 7 is a schematic structural diagram of a communications device according to an embodiment of this application;
FIG. 8 is a schematic structural diagram of a terminal according to an embodiment of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in the specification and claims, "and/or" indicates at least one of connected objects, and the character "/" generally indicates an "or" relationship between the contextually associated objects.

It should be noted that technologies described in the embodiments of this application are not limited to a long term evolution (Long Term Evolution, LTE) or LTE-advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably, and the technologies described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to other applications than the NR system application, for example, to the 6th generation (6^{th} Generation, 6G) communications system.

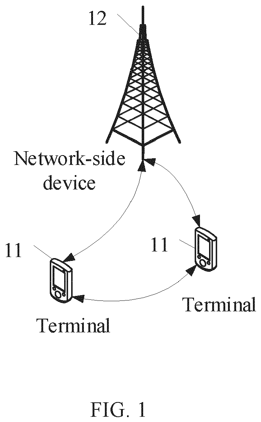

FIG. 1 is a block diagram of a wireless communications system to which embodiments of this application are applicable. The wireless communications system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effects are achieved, the base station is not limited to a specific technical term. It should be noted that the base station in the NR system is used only as an example for description in the embodiments of this application, but a specific type of the base station is not limited.

The following describes in detail a channel state information CSI feedback method and apparatus, a terminal, and a network-side device provided in the embodiments of this application with reference to the accompanying drawings and by using some embodiments and application scenarios thereof.

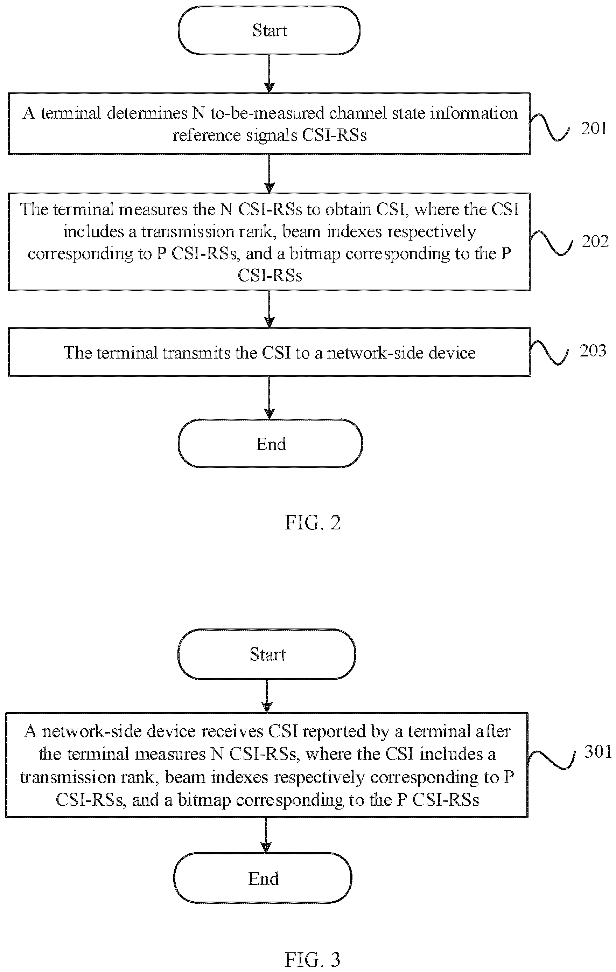

As shown in FIG. 2, an embodiment of this application provides a channel state information CSI feedback method including the following steps.

Step 201: A terminal determines N to-be-measured channel state information reference signals CSI-RSs, where N is an integer greater than 1.

Step 202: The terminal measures the N CSI-RSs to obtain CSI, where the CSI includes a transmission rank (rank), beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N.

Step 203: The terminal transmits the CSI to a network-side device.

In this embodiment of this application, the number of ports for the CSI-RSs may be the same or different, and the number of ports for each CSI-RS is a positive integer greater than 1.

In at least one embodiment of this application, the CSI is evolved type II CSI (eType II CSI for short), that is, the terminal compresses, in frequency domain, a precoding matrix corresponding to a beam that needs feedback of the CSI-RS, and then performs feedback in the CSI. To be specific, the reported CSI includes the bitmap corresponding to the P CSI-RSs. The bitmap is used to indicate that the coefficient, subjected to frequency-domain compression, of the beam that needs feedback of the CSI-RS is 0 or 1. 0 indicates that an amplitude and a phase corresponding to the coefficient are not reported. 1 indicates that the amplitude and the phase corresponding to the coefficient are reported.

In an optional embodiment, P may be equal to N. To be specific, all the N CSI-RSs measured by the terminal are reported in the CSI.

In another optional embodiment, P may be less than N. To be specific, the terminal flexibly selects some of the measured N CSI-RSs to be reported in the CSI. Optionally, in a case that P is less than N, the CSI further includes identification information of the P CSI-RSs, for example, CSI-RS indexes (CSI-RS index, CRI) of the P CSI-RSs. The CRI indicates a CSI-RS selected by the terminal. This mode may also be referred to as that the terminal indicates, through explicit indication, a CSI-RS flexibly selected by the terminal.

In still another optional embodiment, the terminal may alternatively indicate, through implicit indication, a CSI-RS flexibly selected by the terminal, that is, P is equal to N. However, in a bitmap corresponding to the N CSI-RSs, all bits corresponding to an unselected CSI-RS are set to 0s.

In at least one embodiment of this application, step 201 includes the following step.

The terminal receives N CSI-RSs configured by the network-side device. To be specific, a network side does not need to perform an activation operation, and the terminal directly measures the configured N CSI-RSs.

Alternatively, step 201 includes the following step.

The terminal receives M CSI-RSs configured by the network-side device, and receives activation signaling, where the activation signaling is used to activate N CSI-RSs among the M CSI-RSs, and M is an integer greater than N. For example, the activation signaling may be a MAC CE (Medium Access Control Control Element, medium access control control element) or DCI (Downlink Control Information, downlink control information).

In this embodiment of this application, the method further includes the following steps.

The terminal receives the total number of beams that need feedback of the N CSI-RSs that is configured by the network-side device, and determines, based on the total number of beams, the number of beams that need feedback of each CSI-RS; or the terminal receives the number of beams that need feedback of each CSI-RS that is configured by the network-side device; and
the terminal determines beam indexes respectively corresponding to the P CSI-RSs based on the number of beams that need feedback of each CSI-RS.

In other words, the network-side device further configures the number of beams (basis vectors) that the terminal needs to report. The total number may be configured as L, or the number of beams may be configured for each of the N CSI-RSs, for example, L₁, L₂, ..., and L_{N}. When the number of beams is configured as the total number L, the terminal maps the total number L of beams to the N CSI-RSs respectively according to a predefined rule.

For example, if the N CSI-RSs each have the same number of ports, each CSI-RS corresponds to the same number of beams (L is exactly divided by N), or the number of beams corresponding to the last CSI-RS is different from that corresponding to other CSI-RSs (L cannot be exactly divided by N). For another example, if the N CSI-RSs have different numbers of ports, the corresponding number of beams is determined based on the number of ports for each CSI-RS. For example, the number of ports for a CSI-RS 1 is 4, and the number of ports for a CSI-RS 2 is 8. In this case, the number of beams corresponding to the CSI-RS 2 is twice the number of beams corresponding to the CSI-RS 1.

In at least one embodiment of this application, the method further includes the following steps.

The terminal receives one or more values of a subband precoding matrix indicator (Precoding Matrix Indicator, PMI) that are configured by the network-side device; and
the terminal performs, based on the one or more values of the subband PMI, frequency-domain compression on precoding matrices respectively corresponding to the P CSI-RSs, and determines coefficients, subjected to frequency-domain compression, of beams that need feedback of the P CSI-RSs.

It should be noted that, in a case that the network-side device configures one value of the subband PMI, the N CSI-RSs may share the value; or in a case that the network-side device configures a plurality of values of the subband PMI, each CSI-RS corresponds to one value. Optionally, at least two CSI-RSs correspond to different values of the subband PMI.

Optionally, when the number of beams is configured as the total number L, the network-side device configures only one value of the subband PMI; or when the number of beams is configured for each of the N CSI-RSs, the network-side device may configure a common value of the subband PMI or configure N values of the subband PMI respectively (to be specific, one CSI-RS corresponds to one value of the PMI).

In at least one embodiment of this application, the method further includes:

The bitmap corresponding to the P CSI-RSs includes one bitmap, where coefficients, subjected to frequency-domain compression, of beams that need feedback of the P CSI-RSs are mapped to the bitmap; or
the bitmap corresponding to the P CSI-RSs includes a plurality of bitmaps, where coefficients, subjected to frequency-domain compression, of beams that need feedback of one CSI-RS are mapped to each bitmap; where
the bitmap corresponding to the P CSI-RSs is determined by the terminal based on a network configuration or a pre-agreement.

For example, the network-side device may configure the terminal to report one bitmap (bitmap) corresponding to a plurality of CSI-RSs; or the network-side device configures the terminal to report a bitmap (bitmap) corresponding to each CSI-RS, in other words, configures the terminal to report a plurality of bitmaps. Optionally, if the network-side device does not configure the number of bitmaps to be reported, the terminal reports one bitmap by default.

For another example, the "pre-agreement" may be understood as that the terminal and the network-side device predetermine, through signaling interaction, that the bitmap corresponding to the P CSI-RSs includes one bitmap or a plurality of bitmaps. This may also be understood as that it is agreed upon in a protocol that the bitmap corresponding to the P CSI-RSs includes one bitmap or a plurality of bitmaps. To be specific, it is determined that the terminal is to report one bitmap (bitmap) corresponding to a plurality of CSI-RSs; or it is determined that the terminal is to report a bitmap (bitmap) corresponding to each CSI-RS, in other words, it is determined that the terminal is to report a plurality of bitmaps.

Further, in at least one embodiment of this application, the method further includes the following step.

In a case that the network-side device configures the terminal to report one bitmap corresponding to a plurality of CSI-RSs or the network side does not perform configuration, the terminal maps, to one bitmap according to a network-configured or pre-agreed-upon mapping rule, the coefficients, subjected to frequency-domain compression, of the beams that need feedback of the P CSI-RSs.

For example, P = 4: a first CSI-RS, a second CSI-RS, a third CSI-RS, and a fourth CSI-RS. In this case, the terminal maps, to one bitmap, coefficients, subjected to frequency-domain compression, of all beams that need feedback of the first CSI-RS, the second CSI-RS, the third CSI-RS, and the fourth CSI-RS, to obtain one bitmap.

Alternatively, in at least one embodiment of this application, the method further includes the following step.

In a case that the network-side device configures the terminal to report a bitmap corresponding to each CSI-RS, the terminal maps, to a corresponding bitmap according to a network-configured or pre-agreed-upon mapping rule, coefficients, subj ected to frequency-domain compression, of beams that need feedback of each CSI-RS.

For example, P = 4: a first CSI-RS, a second CSI-RS, a third CSI-RS, and a fourth CSI-RS. In this case, the terminal maps, to a bitmap, coefficients, subjected to frequency-domain compression, of beams that need feedback of the first CSI-RS; the terminal maps, to a bitmap, coefficients, subjected to frequency-domain compression, of beams that need feedback of the second CSI-RS; the terminal maps, to a bitmap, coefficients, subjected to frequency-domain compression, of beams that need feedback of the third CSI-RS; and the terminal maps, to a bitmap, coefficients, subjected to frequency-domain compression, of beams that need feedback of the fourth CSI-RS. In this way, four bitmaps are obtained.

It should be noted that, if a transmission rank (rank) included in the CSI is greater than 1, it indicates that the CSI-RS corresponds to at least two transport layers. In this case, a bitmap corresponding to each transport layer may be separately reported in the CSI, or bitmaps may be concatenated according to a specific rule and then reported in the CSI.

In at least one embodiment of this application, the mapping rule includes at least one of the following:
Rule 1: Mapping is performed to the bitmap according to an order of priorities of CSI-RSs. The priorities of the CSI-RSs may be determined based on signal strength (for example, reference signal received power (Reference Signal Received Power, RSRP)).
Rule 2: Mapping is performed to the bitmap according to an order of indexes of CSI-RSs.
Rule 3: Mapping is performed to the bitmap according to an order of beam indexes corresponding to CSI-RSs.
Rule 4: Mapping is performed to the bitmap according to an order of identifiers of coefficients, subjected to frequency-domain compression, of beams that need feedback of CSI-RSs.
Rule 5: Mapping is performed to the bitmap according to an order of transport layer identifiers corresponding to CSI-RSs.
Rule 6: Mapping is performed to the bitmap according to an order of transport layer priorities corresponding to CSI-RSs.

A priority between the rules 1 to 6 may also be determined based on a network configuration or a pre-agreement. If a CSI-RS needs to be discarded (for example, in the case of resource shortage or resource conflict), a CSI-RS that is mapped later is discarded first. However, it needs to be ensured that the terminal and the network-side device have consistent understanding of each rule and a priority of each rule.

For example, when a reported rank (rank) is 1 and the number of beams corresponding to each CSI-RS is greater than 1, the mapping rule is as follows: The rule 2 is preferentially used, then the rule 3 is used, and then the rule 4 is used. Specifically, correspondences of all bits in the bitmap may be as follows: a first coefficient of a first beam of the first CSI-RS, a second coefficient of the first beam of the first CSI-RS, ..., a first coefficient of a second beam of the first CSI-RS, a second coefficient of the second beam of the first CSI-RS, ..., a first coefficient of a first beam of the second CSI-RS, a second coefficient of the first beam of the second CSI-RS, ..., a first coefficient of a second beam of the second CSI-RS, a second coefficient of the first beam of the second CSI-RS, ....

For another example, when a reported rank (rank) is 1 and the number of beams corresponding to each CSI-RS is greater than 1, the mapping rule is as follows: The rule 4 is preferentially used, and then the rule 3 is used. Specifically, correspondences of all bits in the bitmap may be as follows: a first coefficient of a first beam of the first CSI-RS, a first coefficient of a second beam of the first CSI-RS, ..., a second coefficient of a first beam of the second CSI-RS, a second coefficient of a second beam of the second CSI-RS, ....

For another example, when a reported rank (rank) is greater than 1 and the number of beams corresponding to each CSI-RS is greater than 1, the mapping rule is as follows: The rule 5 is preferentially used, then the rule 2 is used, then the rule 3 is used, and then the rule 4 is used. Specifically, correspondences of all bits in the bitmap may be as follows: a first coefficient corresponding to a first layer of a first beam of the first CSI-RS, a second coefficient corresponding to the first layer of the first beam of the first CSI-RS, ..., a first coefficient corresponding to a first layer of a second beam of the first CSI-RS, a second coefficient corresponding to the first layer of the second beam of the first CSI-RS, ..., a first coefficient corresponding to a first layer of a first beam of the second CSI-RS, a second coefficient corresponding to the first layer of the first beam of the second CSI-RS, ..., a first coefficient corresponding to a first layer of a second beam of the second CSI-RS, a second coefficient corresponding to the first layer of the first beam of the second CSI-RS, ..., a first coefficient corresponding to a second layer of the first beam of the first CSI-RS, a second coefficient corresponding to the second layer of the first beam of the first CSI-RS, ..., a first coefficient corresponding to a second layer of the second beam of the first CSI-RS, a second coefficient corresponding to the second layer of the second beam of the first CSI-RS, ..., a first coefficient corresponding to a second layer of the first beam of the second CSI-RS, a second coefficient corresponding to the second layer of the first beam of the second CSI-RS, ..., a first coefficient corresponding to a second layer of the second beam of the second CSI-RS, a second coefficient corresponding to the second layer of the first beam of the second CSI-RS, ....

In this embodiment of this application, in a multipoint transmission system, a terminal measures a plurality of CSI-RSs and then reports CSI, where the CSI carries a bitmap that corresponds to the CSI-RSs and that is determined by the terminal according to a network-configured or pre-agreed-upon mapping rule. A network-side device can determine, according to a corresponding mapping rule, a mapping relationship between the bitmap in the CSI and coefficients, subjected to frequency-domain compression, of beams that need feedback of the CSI-RS, so that the terminal and the network-side device can have consistent understanding of the bitmap, to improve efficiency of correct transmission of the CSI.

As shown in FIG. 3, an embodiment of this application further provides a channel state information CSI feedback method including the following steps.

Step 301: A network-side device receives CSI reported by a terminal after the terminal measures N CSI-RSs, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

In this embodiment of this application, the number of ports for the CSI-RSs may be the same or different, and the number of ports for each CSI-RS is a positive integer greater than 1.

In at least one embodiment of this application, the CSI is evolved type II CSI (eType II CSI for short), that is, the terminal compresses, in frequency domain, a precoding matrix corresponding to a beam that needs feedback of the CSI-RS, and then performs feedback in the CSI. To be specific, the reported CSI includes the bitmap corresponding to the P CSI-RSs. The bitmap is used to indicate that the coefficient, subjected to frequency-domain compression, of the beam that needs feedback of the CSI-RS is 0 or 1. 0 indicates that an amplitude and a phase corresponding to the coefficient are not reported. 1 indicates that the amplitude and the phase corresponding to the coefficient are reported.

In an optional embodiment, P may be equal to N. To be specific, all the N CSI-RSs measured by the terminal are reported in the CSI.

In another optional embodiment, P may be less than N. To be specific, the terminal flexibly selects some of the measured N CSI-RSs to be reported in the CSI. Optionally, in a case that P is less than N, the CSI further includes identification information of the P CSI-RSs, for example, CSI-RS indexes (CSI-RS index, CRI) of the P CSI-RSs. The CRI indicates a CSI-RS selected by the terminal. This mode may also be referred to as that the terminal indicates, through explicit indication, a CSI-RS flexibly selected by the terminal.

In still another optional embodiment, the terminal may alternatively indicate, through implicit indication, a CSI-RS flexibly selected by the terminal, that is, P is equal to N. However, in a bitmap corresponding to the N CSI-RSs, all bits corresponding to an unselected CSI-RS are set to 0s.

In at least one embodiment of this application, the method further includes the following step.

The network-side device configures N CSI-RSs for the terminal, to be specific, a network side does not need to perform an activation operation, and the terminal directly measures the configured N CSI-RSs;
or
the network-side device configures M CSI-RSs for the terminal, and transmits activation signaling to the terminal, where the activation signaling is used to indicate to activate N CSI-RSs among the M CSI-RSs, and M is an integer greater than N. For example, the activation signaling may be a MAC CE (Medium Access Control Control Element, medium access control control element) or DCI (Downlink Control Information, downlink control information).

In this embodiment of this application, the method further includes the following step.

The network-side device configures, for the terminal, the total number of beams that need feedback of the N CSI-RSs;
or
the network-side device configures, for the terminal, the number of beams that need feedback of each CSI-RS.

In other words, the network-side device further configures the number of beams (basis vectors) that the terminal needs to report. The total number may be configured as L, or the number of beams may be configured for each of the N CSI-RSs, for example, L₁, L₂, ..., and L_{N}. When the number of beams is configured as the total number L, the terminal maps the total number L of beams to the N CSI-RSs respectively according to a predefined rule.

For example, if the N CSI-RSs each have the same number of ports, each CSI-RS corresponds to the same number of beams (L is exactly divided by N), or the number of beams corresponding to the last CSI-RS is different from that corresponding to other CSI-RSs (L cannot be exactly divided by N). For another example, if the N CSI-RSs have different numbers of ports, the corresponding number of beams is determined based on the number of ports for each CSI-RS. For example, the number of ports for a CSI-RS 1 is 4, and the number of ports for a CSI-RS 2 is 8. In this case, the number of beams corresponding to the CSI-RS 2 is twice the number of beams corresponding to the CSI-RS 1.

In at least one embodiment of this application, the method further includes the following step.

The network-side device configures, for the terminal, one or more values of a subband precoding matrix indicator PMI.

It should be noted that, in a case that the network-side device configures one value of the subband PMI, the N CSI-RSs may share the value; or in a case that the network-side device configures a plurality of values of the subband PMI, each CSI-RS corresponds to one value. Optionally, different CSI-RSs correspond to different values of the subband PMI.

Optionally, when the number of beams is configured as the total number L, the network-side device configures only one value of the subband PMI; or when the number of beams is configured for each of the N CSI-RSs, the network-side device may configure a common value of the subband PMI or configure N values of the subband PMI respectively (to be specific, one CSI-RS corresponds to one value of the PMI).

In at least one embodiment of this application, the method further includes the following step.

The network-side device configures, for the terminal, that the CSI reported by the terminal includes one bitmap or a plurality of bitmaps, where
in a case that the CSI includes one bitmap, coefficients, subjected to frequency-domain compression, of beams that need feedback of the P CSI-RSs are mapped to the bitmap; or in a case that the CSI includes a plurality of bitmaps, coefficients, subjected to frequency-domain compression, of beams that need feedback of one CSI-RS are mapped to each bitmap.

For example, the network-side device may configure the terminal to report one bitmap (bitmap) corresponding to a plurality of CSI-RSs; or the network-side device configures the terminal to report a bitmap (bitmap) corresponding to each CSI-RS, in other words, configures the terminal to report a plurality of bitmaps. Optionally, if the network-side device does not configure the number of bitmaps to be reported, the terminal reports one bitmap by default.

It should be noted that, if a transmission rank (rank) included in the CSI is greater than 1, it indicates that the CSI-RS corresponds to at least two transport layers. In this case, a bitmap corresponding to each transport layer may be separately reported in the CSI, or bitmaps may be concatenated according to a specific rule and then reported in the CSI.

Further, in at least one embodiment of this application, the method further includes the following step.

The network-side device determines, according to a pre-agreed-upon mapping rule, a mapping relationship between the bitmap in the CSI and the coefficients, subjected to frequency-domain compression, of the beams that need feedback of the CSI-RS.

The mapping rule includes at least one of the following:
Rule 1: Mapping is performed to the bitmap according to an order of priorities of CSI-RSs. The priorities of the CSI-RSs may be determined based on signal strength (for example, RSRP).
Rule 2: Mapping is performed to the bitmap according to an order of indexes of CSI-RSs.
Rule 3: Mapping is performed to the bitmap according to an order of beam indexes corresponding to CSI-RSs.
Rule 4: Mapping is performed to the bitmap according to an order of identifiers of coefficients, subjected to frequency-domain compression, of beams that need feedback of CSI-RSs.
Rule 5: Mapping is performed to the bitmap according to an order of transport layer identifiers corresponding to CSI-RSs.
Rule 6: Mapping is performed to the bitmap according to an order of transport layer priorities corresponding to CSI-RSs.

A priority between the rules 1 to 6 may also be determined based on a network configuration or a pre-agreement. If a CSI-RS needs to be discarded (for example, in the case of resource shortage or resource conflict), a CSI-RS that is mapped later is discarded first. However, it needs to be ensured that the terminal and the network-side device have consistent understanding of each rule and a priority of each rule.

For example, when a reported rank (rank) is 1 and the number of beams corresponding to each CSI-RS is greater than 1, the mapping rule is as follows: The rule 2 is preferentially used, then the rule 3 is used, and then the rule 4 is used. Specifically, correspondences of all bits in the bitmap may be as follows: a first coefficient of a first beam of the first CSI-RS, a second coefficient of the first beam of the first CSI-RS, ..., a first coefficient of a second beam of the first CSI-RS, a second coefficient of the second beam of the first CSI-RS, ..., a first coefficient of a first beam of the second CSI-RS, a second coefficient of the first beam of the second CSI-RS, ..., a first coefficient of a second beam of the second CSI-RS, a second coefficient of the first beam of the second CSI-RS, ....

For another example, when a reported rank (rank) is 1 and the number of beams corresponding to each CSI-RS is greater than 1, the mapping rule is as follows: The rule 4 is preferentially used, and then the rule 3 is used. Specifically, correspondences of all bits in the bitmap may be as follows: a first coefficient of a first beam of the first CSI-RS, a first coefficient of a second beam of the first CSI-RS, ..., a second coefficient of a first beam of the second CSI-RS, a second coefficient of a second beam of the second CSI-RS, ....

For another example, when a reported rank (rank) is greater than 1 and the number of beams corresponding to each CSI-RS is greater than 1, the mapping rule is as follows: The rule 5 is preferentially used, then the rule 2 is used, then the rule 3 is used, and then the rule 4 is used. Specifically, correspondences of all bits in the bitmap may be as follows: a first coefficient corresponding to a first layer of a first beam of the first CSI-RS, a second coefficient corresponding to the first layer of the first beam of the first CSI-RS, ..., a first coefficient corresponding to a first layer of a second beam of the first CSI-RS, a second coefficient corresponding to the first layer of the second beam of the first CSI-RS, ..., a first coefficient corresponding to a first layer of a first beam of the second CSI-RS, a second coefficient corresponding to the first layer of the first beam of the second CSI-RS, ..., a first coefficient corresponding to a first layer of a second beam of the second CSI-RS, a second coefficient corresponding to the first layer of the first beam of the second CSI-RS, ..., a first coefficient corresponding to a second layer of the first beam of the first CSI-RS, a second coefficient corresponding to the second layer of the first beam of the first CSI-RS, ..., a first coefficient corresponding to a second layer of the second beam of the first CSI-RS, a second coefficient corresponding to the second layer of the second beam of the first CSI-RS, ..., a first coefficient corresponding to a second layer of the first beam of the second CSI-RS, a second coefficient corresponding to the second layer of the first beam of the second CSI-RS, ..., a first coefficient corresponding to a second layer of the second beam of the second CSI-RS, a second coefficient corresponding to the second layer of the first beam of the second CSI-RS, ....

In this embodiment of this application, in a multipoint transmission system, a terminal measures a plurality of CSI-RSs and then reports CSI, where the CSI carries a bitmap that corresponds to the CSI-RSs and that is determined by the terminal according to a network-configured or pre-agreed-upon mapping rule. A network-side device can determine, according to a corresponding mapping rule, a mapping relationship between the bitmap in the CSI and coefficients, subjected to frequency-domain compression, of beams that need feedback of the CSI-RS, so that the terminal and the network-side device can have consistent understanding of the bitmap, to improve efficiency of correct transmission of the CSI.

To more clearly describe the CSI feedback method provided in the embodiments of this application, the following provides descriptions with reference to several examples.

### Example 1

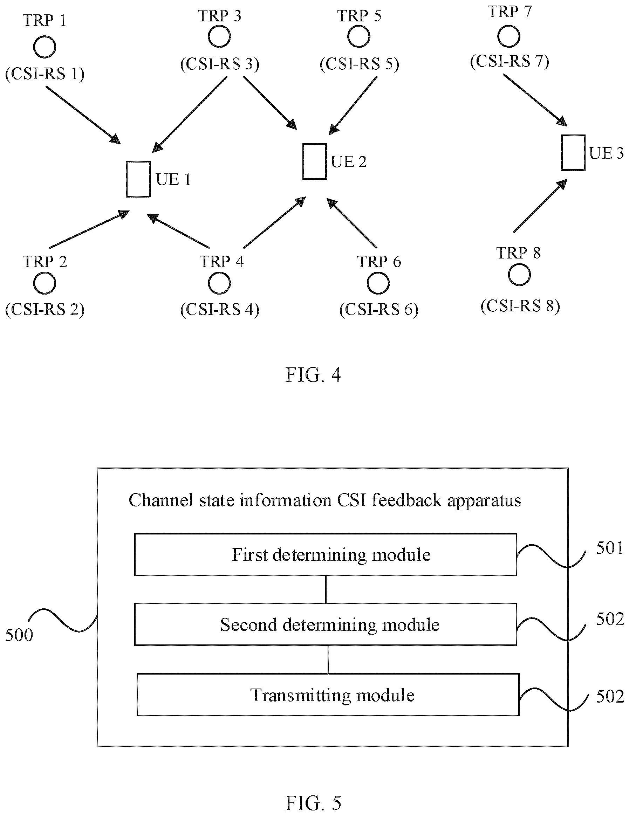

As shown in FIG. 4, a multipoint transmission system includes eight transmission/reception points (Transmission/Reception Point, TRP): a TRP 1, a TRP 2, a TRP 3, a TRP 4, a TRP 5, a TRP 6, a TRP 7, and a TRP 8.

A base station may configure M = 8 CSI-RS pilots (a CSI-RS 1, a CSI-RS 2, a CSI-RS 3, a CSI-RS 4, a CSI-RS 5, a CSI-RS 6, a CSI-RS 7, and a CSI-RS 8) for UE 1, and may further activate N = 4 CSI-RSs.

The base station may configure M = 4 CSI-RS pilots (the CSI-RS 3, the CSI-RS 4, the CSI-RS 5, and the CSI-RS 6) for UE 2, and may further activate N = 4 CSI-RSs.

The base station may configure M = 2 CSI-RS pilots (the CSI-RS 7 and the CSI-RS 8) for UE 3, and the base station does not transmit an activation command, to be specific, both pilots are activated by default.

### Example 2

It is assumed that a base station configures the same number of ports for each CSI-RS pilot and configures four CSI-RSs, the base station configures a terminal to report L = 8 beams, each beam corresponds to four coefficients subjected to frequency-domain compression, and a reported rank (rank) is 1. In this case, values of coefficients, subjected to frequency-domain compression, corresponding to each beam are shown in Table 1:

**Table 1**

| Beam index | First coefficient | Second coefficient | Third coefficient | Fourth coefficient |
|---|---|---|---|---|
| 1 | 1 | 0 | 1 | 0 |
| 2 | 0 | 1 | 1 | 0 |
| 3 | 1 | 1 | 1 | 1 |
| 4 | 1 | 0 | 0 | 1 |
| 5 | 0 | 1 | 0 | 1 |
| 6 | 0 | 1 | 0 | 1 |
| 7 | 1 | 0 | 1 | 0 |
| 8 | 0 | 1 | 1 | 1 |

The beam indexes 1 and 2 correspond to a first CSI-RS, the beam indexes 3 and 4 correspond to a second CSI-RS, the beam indexes 5 and 6 correspond to a third CSI-RS, and the beam indexes 7 and 8 correspond to a fourth CSI-RS.

In this case, a bitmap included in CSI is 1010 0110 1111 1001 0101 0101 1010 0111, or a bitmap included in CSI is 10110010 01101101 11100011 00111101.

Alternatively, values of coefficients, subjected to frequency-domain compression, corresponding to each beam are shown in Table 2:

**Table 2**

| Beam index | First coefficient | Second coefficient | Third coefficient | Fourth coefficient |
|---|---|---|---|---|
| 1 | 1 | 0 | 1 | 0 |
| 2 | 0 | 1 | 1 | 0 |
| 3 | 1 | 1 | 1 | 1 |
| 4 | 1 | 0 | 0 | 1 |
| 5 | 0 | 0 | 0 | 0 |
| 6 | 0 | 0 | 0 | 0 |
| 7 | 1 | 0 | 1 | 0 |
| 8 | 0 | 1 | 1 | 1 |

The beam indexes 1 and 2 correspond to a first CSI-RS, the beam indexes 3 and 4 correspond to a second CSI-RS, the beam indexes 5 and 6 correspond to a third CSI-RS, and the beam indexes 7 and 8 correspond to a fourth CSI-RS. In Table 2, all coefficients corresponding to the beams 5 and 6 are 0. This indicates that the third CSI-RS is not selected in CSI reported by the terminal.

In this case, a bitmap included in the CSI is 1010 0110 1111 1001 0000 0000 1010 0111, or a bitmap included in the CSI is 10110010 01100001 11100011 00110001.

### Example 3

It is assumed that a base station configures the same number of ports for each CSI-RS pilot and configures four CSI-RSs, the base station configures a terminal to report L₁ = 2 beams, L₂ = 4 beams, L₃ = 2 beams, and L₄ = 2 beams, each beam corresponds to four coefficients subjected to frequency-domain compression, a reported rank (rank) is 1, and one bitmap is reported for each CSI-RS.

In this case, values of coefficients, subjected to frequency-domain compression, corresponding to each beam of a first CSI-RS are shown in Table 3:

**Table 3**

| Beam index | First coefficient | Second coefficient | Third coefficient | Fourth coefficient |
|---|---|---|---|---|
| 1 | 1 | 0 | 1 | 0 |
| 2 | 0 | 1 | 1 | 0 |

In this case, a bitmap corresponding to the first CSI-RS is 10100110 or 10011100.

Values of coefficients, subjected to frequency-domain compression, corresponding to each beam of a second CSI-RS are shown in Table 4:

**Table 4**

| Beam index | First coefficient | Second coefficient | Third coefficient | Fourth coefficient |
|---|---|---|---|---|
| 1 | 1 | 0 | 1 | 0 |
| 2 | 0 | 1 | 1 | 0 |
| 3 | 1 | 1 | 1 | 1 |
| 4 | 1 | 0 | 0 | 1 |

In this case, a bitmap corresponding to the second CSI-RS is 1010011011111001 or 1011011011100011.

Values of coefficients, subjected to frequency-domain compression, corresponding to each beam of a third CSI-RS are shown in Table 5:

**Table 5**

| Beam index | First coefficient | Second coefficient | Third coefficient | Fourth coefficient |
|---|---|---|---|---|
| 1 | 1 | 0 | 1 | 0 |
| 2 | 0 | 1 | 0 | 1 |

In this case, a bitmap corresponding to the third CSI-RS is 10100101 or 10011001.

Values of coefficients, subjected to frequency-domain compression, corresponding to each beam of a fourth CSI-RS are shown in Table 6:

**Table 6**

| Beam index | First coefficient | Second coefficient | Third coefficient | Fourth coefficient |
|---|---|---|---|---|
| 1 | 0 | 1 | 1 | 1 |
| 2 | 1 | 1 | 0 | 1 |

In this case, a bitmap corresponding to the fourth CSI-RS is 01111101 or 01111011.

The CSI feedback method provided in the embodiments of this application may be performed by a CSI feedback apparatus. In the embodiments of this application, a CSI feedback apparatus provided in the embodiments of this application is described by using an example in which the CSI feedback apparatus performs the CSI feedback method.

As shown in FIG. 5, an embodiment of this application further provides a channel state information CSI feedback apparatus 500, including:
a first determining module 501, configured to determine N to-be-measured channel state information reference signals CSI-RSs, where N is an integer greater than 1;
a second determining module 502, configured to measure the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N; and
a transmitting module 503, configured to transmit the CSI to a network-side device.

In an optional embodiment, the first determining module includes:
a first receiving submodule, configured to receive N CSI-RSs configured by the network-side device;
   or
a second receiving submodule, configured to receive M CSI-RSs configured by the network-side device, and receive activation signaling, where the activation signaling is used to activate N CSI-RSs among the M CSI-RSs, and M is an integer greater than N.

In an optional embodiment, the apparatus further includes:
a first configuration receiving module, configured to receive the total number of beams that need feedback of the N CSI-RSs that is configured by the network-side device, and determine, based on the total number of beams, the number of beams that need feedback of each CSI-RS; or receive the number of beams that need feedback of each CSI-RS that is configured by the network-side device; and
a third determining module, configured to determine beam indexes respectively corresponding to the P CSI-RSs based on the number of beams that need feedback of each CSI-RS.

In an optional embodiment, the apparatus further includes:
a second configuration receiving module, configured to receive one or more values of a subband precoding matrix indicator PMI that are configured by the network-side device; and
a fourth determining module, configured to perform, based on the one or more values of the subband PMI, frequency-domain compression on precoding matrices respectively corresponding to the P CSI-RSs, and determine coefficients, subj ected to frequency-domain compression, of beams that need feedback of the P CSI-RSs.

In an optional embodiment, the bitmap corresponding to the P CSI-RSs includes one bitmap, where coefficients, subjected to frequency-domain compression, of beams that need feedback of the P CSI-RSs are mapped to the bitmap; or
the bitmap corresponding to the P CSI-RSs includes a plurality of bitmaps, where coefficients, subjected to frequency-domain compression, of beams that need feedback of one CSI-RS are mapped to each bitmap; where
the bitmap corresponding to the P CSI-RSs is determined by the terminal based on a network configuration or a pre-agreement.

In an optional embodiment, in a case that P is less than N, the CSI further includes identification information of the P CSI-RSs.

In an optional embodiment, the apparatus further includes:
a first mapping module, configured to map, to one bitmap according to a network-configured or pre-agreed-upon mapping rule, the coefficients, subjected to frequency-domain compression, of the beams that need feedback of the P CSI-RSs;
   or
a second mapping module, configured to map, to a corresponding bitmap according to a network-configured or pre-agreed-upon mapping rule, coefficients, subj ected to frequency-domain compression, of beams that need feedback of each CSI-RS.

In an optional embodiment, the mapping rule includes at least one of the following:
performing mapping to the bitmap according to an order of priorities of CSI-RSs;
performing mapping to the bitmap according to an order of indexes of CSI-RSs;
performing mapping to the bitmap according to an order of beam indexes corresponding to CSI-RSs;
performing mapping to the bitmap according to an order of identifiers of coefficients, subjected to frequency-domain compression, of beams that need feedback of CSI-RSs;
performing mapping to the bitmap according to an order of transport layer identifiers corresponding to CSI-RSs; and
performing mapping to the bitmap according to an order of transport layer priorities corresponding to CSI-RSs.

In this embodiment of this application, in a multipoint transmission system, a terminal measures a plurality of CSI-RSs and then reports CSI, where the CSI carries a bitmap that corresponds to the CSI-RSs and that is determined by the terminal according to a network-configured or pre-agreed-upon mapping rule. A network-side device can determine, according to a corresponding mapping rule, a mapping relationship between the bitmap in the CSI and coefficients, subjected to frequency-domain compression, of beams that need feedback of the CSI-RS, so that the terminal and the network-side device can have consistent understanding of the bitmap, to improve efficiency of correct transmission of the CSI.

It should be noted that the channel state information CSI feedback apparatus provided in this embodiment of this application is an apparatus capable of performing the foregoing channel state information CSI feedback method, and all embodiments of the foregoing channel state information CSI feedback method are applicable to the apparatus, with the same or similar beneficial effects achieved.

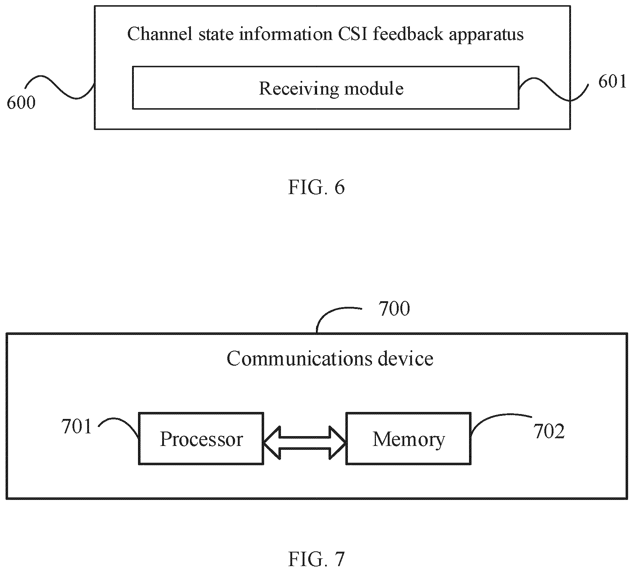

As shown in FIG. 6, an embodiment of this application further provides a channel state information CSI feedback apparatus 600, including:
a receiving module 601, configured to receive CSI reported by a terminal after the terminal measures N CSI-RSs, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

In an optional embodiment, the apparatus further includes:
a first configuration module, configured to configure N CSI-RSs for the terminal; or
configured to configure M CSI-RSs for the terminal, and transmit activation signaling to the terminal, where the activation signaling is used to indicate to activate N CSI-RSs among the M CSI-RSs, and M is an integer greater than N.

In an optional embodiment, the apparatus further includes:
a second configuration module, configured to configure, for the terminal, the total number of beams that need feedback of the N CSI-RSs; or
configured to configure, for the terminal, the number of beams that need feedback of each CSI-RS.

In an optional embodiment, the apparatus further includes:
a third configuration module, configured to configure, for the terminal, one or more values of a subband precoding matrix indicator PMI.

In an optional embodiment, the apparatus further includes:
a fourth configuration module, configured to configure, for the terminal, that the CSI reported by the terminal includes one bitmap or a plurality of bitmaps, where
in a case that the CSI includes one bitmap, coefficients, subjected to frequency-domain compression, of beams that need feedback of the P CSI-RSs are mapped to the bitmap; or in a case that the CSI includes a plurality of bitmaps, coefficients, subjected to frequency-domain compression, of beams that need feedback of one CSI-RS are mapped to each bitmap.

In an optional embodiment, in a case that P is less than N, the CSI further includes identification information of the P CSI-RSs.

In an optional embodiment, the apparatus further includes:
a tenth determining module, configured to determine, according to a pre-agreed-upon mapping rule, a mapping relationship between the bitmap in the CSI and the coefficients, subjected to frequency-domain compression, of the beams that need feedback of the CSI-RS.

In an optional embodiment, the mapping rule includes at least one of the following:
performing mapping to the bitmap according to an order of priorities of CSI-RSs;
performing mapping to the bitmap according to an order of indexes of CSI-RSs;
performing mapping to the bitmap according to an order of beam indexes corresponding to CSI-RSs;
performing mapping to the bitmap according to an order of identifiers of coefficients, subjected to frequency-domain compression, of beams that need feedback of CSI-RSs;
performing mapping to the bitmap according to an order of transport layer identifiers corresponding to CSI-RSs; and
performing mapping to the bitmap according to an order of transport layer priorities corresponding to CSI-RSs.

In this embodiment of this application, in a multipoint transmission system, a terminal measures a plurality of CSI-RSs and then reports CSI, where the CSI carries a bitmap that corresponds to the CSI-RSs and that is determined by the terminal according to a network-configured or pre-agreed-upon mapping rule. A network-side device can determine, according to a corresponding mapping rule, a mapping relationship between the bitmap in the CSI and coefficients, subjected to frequency-domain compression, of beams that need feedback of the CSI-RS, so that the terminal and the network-side device can have consistent understanding of the bitmap, to improve efficiency of correct transmission of the CSI.

It should be noted that the channel state information CSI feedback apparatus provided in this embodiment of this application is an apparatus capable of performing the foregoing channel state information CSI feedback method, and all embodiments of the foregoing channel state information CSI feedback method are applicable to the apparatus, with the same or similar beneficial effects achieved.

The channel state information CSI feedback apparatus in the embodiments of this application may be an electronic device, for example, an electronic device with an operating system; or may be a component in an electronic device, for example, an integrated circuit or a chip. The electronic device may be a terminal or other devices than terminals. For example, the terminal may include but is not limited to the aforementioned types of the terminal 11, and the other devices may be servers, network attached storage (Network Attached Storage, NAS), or the like, which are not specifically limited in the embodiments of this application.

The channel state information CSI feedback apparatus provided in the embodiments of this application is capable of implementing the processes implemented in the method embodiments of FIG. 1 to FIG. 4, with the same technical effects achieved. To avoid repetition, details are not described herein again.

Optionally, as shown in FIG. 7, an embodiment of this application further provides a communications device 700, including a processor 701 and a memory 702. The memory 702 stores a program or instructions capable of running on the processor 701. For example, in a case that the communications device 700 is a terminal, when the program or instructions are executed by the processor 701, the steps in the embodiments of the channel state information CSI feedback method are implemented, with the same technical effects achieved. In a case that the communications device 700 is a network-side device, when the program or instructions are executed by the processor 701, the steps in the embodiments of the channel state information CSI feedback method are implemented, with the same technical effects achieved. To avoid repetition, details are not described herein again.

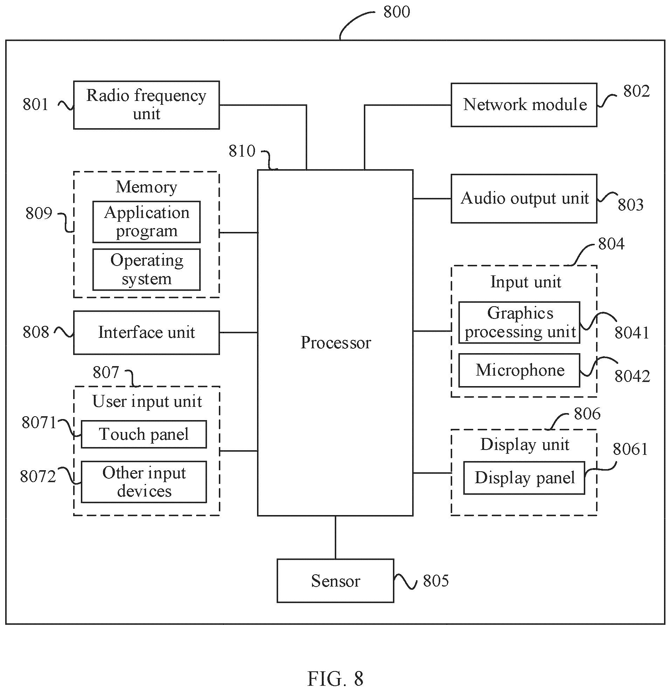

An embodiment of this application further provides a terminal, including a processor and a communications interface. The processor is configured to: determine N to-be-measured channel state information reference signals CSI-RSs, where N is an integer greater than 1; and measure the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N. The communications interface is configured to transmit the CSI to a network-side device. The terminal embodiment corresponds to the foregoing terminal-side method embodiment, and all implementation processes and implementations of the foregoing method embodiment are applicable to the terminal embodiment, with the same technical effects achieved. Specifically, FIG. 8 is a schematic diagram of a hardware structure of a terminal for implementing the embodiments of this application.

The terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) for supplying power to the components. The power supply may be logically connected to the processor 810 via a power management system, so that functions such as charge management, discharge management, and power consumption management are implemented via the power management system. The terminal structure shown in FIG. 8 does not constitute any limitation on the terminal. The terminal may include more or fewer components than shown in the figure, or combine some of the components, or arrange the components differently. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in an image capture mode or a video capture mode. The display unit 806 may include a display panel 8061. The display panel 8061 may be configured in a form of a liquid crystal display, an organic light-emitting diode display, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function button (for example, volume control button or on/off button), a trackball, a mouse, and a joystick. Details are not described herein.

In this embodiment of this application, the radio frequency unit 801 receives downlink data from a network-side device and transfers the data to the processor 810 for processing; and the radio frequency unit 801 can additionally send uplink data to the network-side device. Generally, the radio frequency unit 801 includes but is not limited to an antenna, an amplifier, a transceiver, a coupler, a low noise amplifier, and a duplexer.

The memory 809 may be configured to store software programs or instructions and various data. The memory 809 may mainly include a first storage area for storing a program or instructions and a second storage area for storing data. The first storage area may store an operating system, an application program or instructions required by at least one function (for example, a sound play function or an image play function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 809 in this embodiment of this application includes but is not limited to these and any other suitable types of memories.

The processor 810 may include one or more processing units. Optionally, the processor 810 integrates an application processor and a modem processor. The application processor mainly processes operations related to an operating system, a user interface, an application program, and the like. The modem processor mainly processes radio communication signals, for example, being a baseband processor. It can be understood that the modem processor may alternatively be not integrated in the processor 810.

The processor 810 is configured to: determine N to-be-measured channel state information reference signals CSI-RSs, where N is an integer greater than 1; and measure the N CSI-RSs to obtain CSI, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N.

The radio frequency unit 801 is configured to transmit the CSI to a network-side device.

In this embodiment of this application, in a multipoint transmission system, a terminal measures a plurality of CSI-RSs and then reports CSI, where the CSI carries a bitmap that corresponds to the CSI-RSs and that is determined by the terminal according to a network-configured or pre-agreed-upon mapping rule. A network-side device can determine, according to a corresponding mapping rule, a mapping relationship between the bitmap in the CSI and coefficients, subjected to frequency-domain compression, of beams that need feedback of the CSI-RS, so that the terminal and the network-side device can have consistent understanding of the bitmap, to improve efficiency of correct transmission of the CSI.

It should be noted that the terminal provided in this embodiment of this application is a terminal capable of performing the foregoing channel state information CSI feedback method, and all embodiments of the foregoing channel state information CSI feedback method are applicable to the terminal, with the same or similar beneficial effects achieved.

An embodiment of this application further provides a network-side device, including a processor and a communications interface. The communications interface is configured to receive CSI reported by a terminal after the terminal measures N CSI-RSs, where the CSI includes a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N. The network-side device embodiment corresponds to the foregoing method embodiment for the network-side device, and all implementation processes and implementations of the foregoing method embodiment are applicable to the network-side device embodiment, with the same technical effects achieved.

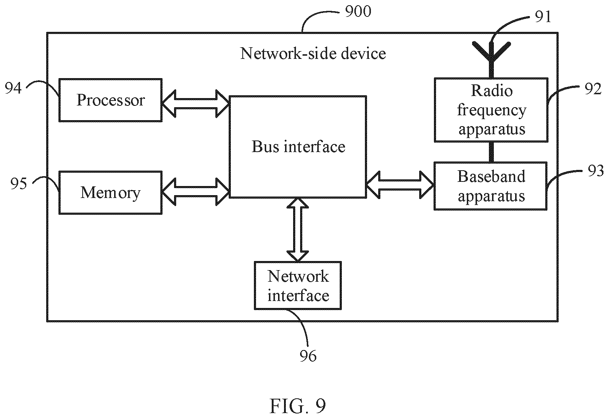

Specifically, an embodiment of this application further provides a network-side device. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91, and transmits the received information to the baseband apparatus 93 for processing. In a downlink direction, the baseband apparatus 93 processes to-be-transmitted information, and transmits the information to the radio frequency apparatus 92; and the radio frequency apparatus 92 processes the received information and then transmits the information through the antenna 91.

The method performed by the network-side device in the foregoing embodiment may be implemented in the baseband apparatus 93, and the baseband apparatus 93 includes a baseband processor.

The baseband apparatus 93 may include, for example, at least one baseband board, where a plurality of chips are disposed on the baseband board. As shown in FIG. 9, one of the chips is, for example, the baseband processor, which is connected to the memory 95 through a bus interface, to invoke a program in the memory 95 to perform the operations of the network device shown in the foregoing method embodiments.

The network-side device may further include a network interface 96. The interface is, for example, a common public radio interface (common public radio interface, CPRI).

Specifically, the network-side device 900 in this embodiment of the present invention further includes instructions or a program stored in the memory 95 and capable of running on the processor 94, and the processor 94 invokes the instructions or program in the memory 95 to perform the method performed by the modules shown in FIG. 6, with the same technical effects achieved. To avoid repetition, details are not described herein again.

An embodiment of this application further provides a readable storage medium. The readable storage medium stores a program or instructions. When the program or instructions are executed by a processor, the processes in the embodiments of the channel state information CSI feedback method are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communications interface. The communications interface is coupled to the processor. The processor is configured to run a program or instructions, to implement the processes in the embodiments of the channel state information CSI feedback method, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the embodiments of the channel state information CSI feedback method, with the same technical effects achieved. To avoid repetition, details are not described herein again.

An embodiment of this application further provides a communications system, including a terminal and a network-side device, where the terminal may be configured to perform the steps of the foregoing channel state information CSI feedback method, and the network-side device may be configured to perform the steps of the foregoing channel state information CSI feedback method.

It should be noted that in this specification, the terms "include" and "comprise", or any of their variants are intended to cover a non-exclusive inclusion, such that a process, method, article, or apparatus that includes a list of elements includes not only those elements but also other elements that are not expressly listed, or further includes elements inherent to such process, method, article, or apparatus. In absence of more constraints, an element preceded by "includes a ..." does not preclude the existence of other identical elements in the process, method, article, or apparatus that includes the element. In addition, it should be noted that the scope of the methods and apparatuses in the embodiments of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the foregoing descriptions of the embodiments, persons skilled in the art can clearly understand that the methods in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A channel state information CSI feedback method, comprising:
determining, by a terminal, N to-be-measured channel state information reference signals CSI-RSs, wherein N is an integer greater than 1;
measuring, by the terminal, the N CSI-RSs to obtain CSI, wherein the CSI comprises a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N; and
transmitting, by the terminal, the CSI to a network-side device.

2. The method according to claim 1, wherein the determining, by a terminal, N to-be-measured CSI-RSs comprises:
receiving, by the terminal, N CSI-RSs configured by the network-side device;
or
receiving, by the terminal, M CSI-RSs configured by the network-side device, and receiving activation signaling, wherein the activation signaling is used to activate N CSI-RSs among the M CSI-RSs, and M is an integer greater than N.

3. The method according to claim 1 or 2, wherein the method further comprises:
receiving, by the terminal, the total number of beams that need feedback of the N CSI-RSs that is configured by the network-side device, and determining, based on the total number of beams, the number of beams that need feedback of each CSI-RS; or receiving, by the terminal, the number of beams that need feedback of each CSI-RS that is configured by the network-side device; and
determining, by the terminal, beam indexes respectively corresponding to the P CSI-RSs based on the number of beams that need feedback of each CSI-RS.

4. The method according to claim 1 or 2, wherein the method further comprises:
receiving, by the terminal, one or more values of a subband precoding matrix indicator PMI that are configured by the network-side device; and
performing, by the terminal based on the one or more values of the subband PMI, frequency-domain compression on precoding matrices respectively corresponding to the P CSI-RSs, and determining coefficients, subjected to frequency-domain compression, of beams that need feedback of the P CSI-RSs.

5. The method according to claim 1 or 2, wherein
the bitmap corresponding to the P CSI-RSs comprises one bitmap, wherein coefficients, subjected to frequency-domain compression, of beams that need feedback of the P CSI-RSs are mapped to the bitmap; or
the bitmap corresponding to the P CSI-RSs comprises a plurality of bitmaps, wherein coefficients, subjected to frequency-domain compression, of beams that need feedback of one CSI-RS are mapped to each bitmap; wherein
the bitmap corresponding to the P CSI-RSs is determined by the terminal based on a network configuration or a pre-agreement.

6. The method according to claim 1 or 2, wherein in a case that P is less than N, the CSI further comprises identification information of the P CSI-RSs.

7. The method according to claim 4, wherein the method further comprises:
mapping, by the terminal to one bitmap according to a network-configured or pre-agreed-upon mapping rule, the coefficients, subjected to frequency-domain compression, of the beams that need feedback of the P CSI-RSs;
or
mapping, by the terminal to a corresponding bitmap according to a network-configured or pre-agreed-upon mapping rule, coefficients, subjected to frequency-domain compression, of beams that need feedback of each CSI-RS.

8. The method according to claim 7, wherein the mapping rule comprises at least one of the following:
performing mapping to the bitmap according to an order of priorities of CSI-RSs;
performing mapping to the bitmap according to an order of indexes of CSI-RSs;
performing mapping to the bitmap according to an order of beam indexes corresponding to CSI-RSs;
performing mapping to the bitmap according to an order of identifiers of coefficients, subjected to frequency-domain compression, of beams that need feedback of CSI-RSs;
performing mapping to the bitmap according to an order of transport layer identifiers corresponding to CSI-RSs; and
performing mapping to the bitmap according to an order of transport layer priorities corresponding to CSI-RSs.

9. A channel state information CSI feedback method, comprising:
receiving, by a network-side device, CSI reported by a terminal after the terminal measures N CSI-RSs, wherein the CSI comprises a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

10. The method according to claim 9, wherein the method further comprises:
configuring, by the network-side device, N CSI-RSs for the terminal;
or
configuring, by the network-side device, M CSI-RSs for the terminal, and transmitting activation signaling to the terminal, wherein the activation signaling is used to indicate to activate N CSI-RSs among the M CSI-RSs, and M is an integer greater than N.

11. The method according to claim 9 or 10, wherein the method further comprises:
configuring, by the network-side device for the terminal, the total number of beams that need feedback of the N CSI-RSs;
or
configuring, by the network-side device for the terminal, the number of beams that need feedback of each CSI-RS.

12. The method according to claim 9 or 10, wherein the method further comprises:
configuring, by the network-side device for the terminal, one or more values of a subband precoding matrix indicator PMI.

13. The method according to claim 9 or 10, wherein the method further comprises:
configuring, by the network-side device for the terminal, that the CSI reported by the terminal comprises one bitmap or a plurality of bitmaps, wherein
in a case that the CSI comprises one bitmap, coefficients, subjected to frequency-domain compression, of beams that need feedback of the P CSI-RSs are mapped to the bitmap; or in a case that the CSI comprises a plurality of bitmaps, coefficients, subjected to frequency-domain compression, of beams that need feedback of one CSI-RS are mapped to each bitmap.

14. The method according to claim 9 or 10, wherein in a case that P is less than N, the CSI further comprises identification information of the P CSI-RSs.

15. The method according to claim 9 or 10, wherein the method further comprises:
determining, by the network-side device according to a pre-agreed-upon mapping rule, a mapping relationship between the bitmap in the CSI and the coefficients, subjected to frequency-domain compression, of the beams that need feedback of the CSI-RS.

16. The method according to claim 15, wherein the mapping rule comprises at least one of the following:
performing mapping to the bitmap according to an order of priorities of CSI-RSs;
performing mapping to the bitmap according to an order of indexes of CSI-RSs;
performing mapping to the bitmap according to an order of beam indexes corresponding to CSI-RSs;
performing mapping to the bitmap according to an order of identifiers of coefficients, subjected to frequency-domain compression, of beams that need feedback of CSI-RSs;
performing mapping to the bitmap according to an order of transport layer identifiers corresponding to CSI-RSs; and
performing mapping to the bitmap according to an order of transport layer priorities corresponding to CSI-RSs.

17. A channel state information CSI feedback apparatus, comprising:
a first determining module, configured to determine N to-be-measured channel state information reference signals CSI-RSs, wherein N is an integer greater than 1;
a second determining module, configured to measure the N CSI-RSs to obtain CSI, wherein the CSI comprises a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, and P is an integer less than or equal to N; and
a transmitting module, configured to transmit the CSI to a network-side device.

18. A terminal, comprising a processor and a memory, wherein the memory stores a program or instructions capable of running on the processor, and when the program or instructions are executed by the processor, the steps of the channel state information CSI feedback method according to any one of claims 1 to 8 are implemented.

19. A channel state information CSI feedback apparatus, comprising:
a receiving module, configured to receive CSI reported by a terminal after the terminal measures N CSI-RSs, wherein the CSI comprises a transmission rank, beam indexes respectively corresponding to P CSI-RSs, and a bitmap corresponding to the P CSI-RSs, the bitmap is used to indicate coefficients, subjected to frequency-domain compression, of beams that need feedback of the CSI-RS, N is an integer greater than 1, and P is an integer less than or equal to N.

20. A network-side device, comprising a processor and a memory, wherein the memory stores a program or instructions capable of running on the processor, and when the program or instructions are executed by the processor, the steps of the channel state information CSI feedback method according to any one of claims 9 to 16 are implemented.

21. A readable storage medium, wherein the readable storage medium stores a program or instructions, and when the program or instructions are executed by a processor, the channel state information CSI feedback method according to any one of claims 1 to 8 is implemented, or the steps of the channel state information CSI feedback method according to any one of claims 9 to 16 are implemented.
